# EUROPÄISCHE PATENTSCHRIFT

(11) **EP 1 306 820 B1**
(45) Veröffentlichungstag und Bekanntmachung des Hinweises auf die Patenterteilung: **24.03.2010**
(21) Anmeldenummer: 02023711.1
(22) Anmeldetag: 23.10.2002
(51) Int. Cl.: G07F 7/10, H04L 9/32, G07F 7/08

(54) **Signatur eines Dokuments**
Document signature
Signature d'un document

(30) Priorität: 24.10.2001 DE 10152462
(43) Veröffentlichungstag der Anmeldung: 02.05.2003
(73) Patentinhaber: Giesecke & Devrient GmbH, 81677 München (DE)
(72) Erfinder: Holtmann, Ludger, 85570 Markt Schwaben (DE); Büttner, Bernhard, 80992 München (DE)
(74) Vertreter: Dendorfer, Claus

(56) Entgegenhaltungen:
- EP-A- 0 940 945
- WO-A-00/56007
- WO-A-02/28005
- WO-A-99/08415
- DE-A- 19 754 101
- DE-A- 19 811 720
- US-A- 5 615 268
- US-B1- 6 297 891

## Beschreibung

Die Erfindung betrifft das technische Gebiet der kryptographischen Signatur von Dokumenten. In diesem Zusammenhang soll als "Dokument" jede Datei mit darstellbaren Informationen verstanden werden, unabhängig davon, ob diese Informationen textueller, graphischer oder anderer Natur sind.

Mit der steten Zunahme der elektronischen Kommunikation und des elektronischen Handels nimmt auch die Bedeutung kryptographischer Signaturverfahren zu. Durch derartige Verfahren soll sichergestellt werden, daß erstens der Unterzeichner eines Dokuments eindeutig identifizierbar ist und zweitens keine Manipulationen oder Veränderungen des Dokuments nach der Unterzeichnung vorgenommen werden können. Diverse Signaturverfahren sind bekannt; in der Regel werden dabei aus dem zu unterzeichnenden Dokument Prüfdaten berechnet und diese Prüfdaten dann in einem asymmetrischen Verschlüsselungsverfahren mit einem privaten Schlüssel des Unterzeichners verschlüsselt. Der Empfänger kann mittels eines öffentlichen Schlüssels des Unterzeichners die ursprünglichen Prüfdaten berechnen und diese dann mit dem Ergebnis einer eigenen Prüfdatenberechnung des empfangenen Dokuments vergleichen.

Es besteht jedoch das Problem, daß Manipulationen während des Signaturvorgangs möglich sind. So kann beispielsweise ein mit einer "Hintertür" versehenes oder von einem Virus befallenes Anwenderprogramm oder Betriebssystem dem Unterzeichner zwar das von ihm gewünschte Dokument anzeigen, aber dem Signaturvorgang andere Daten zugrunde legen. Diese Gefahr besteht auch dann, wenn der eigentliche Signaturvorgang nicht durch den möglicherweise virenbefallenen Rechner des Unterzeichners durchgeführt wird, sondern in einem externen, manipulationsgeschützten Gerät, z.B. einem Chipkartenterminal mit eingesteckter Chipkarte, erfolgt.

In der deutschen Patentschrift DE 197 54 101 C2 wird ein Gerät vorgeschlagen, das eine baulich mit ihm verbundene Datenanzeigeeinheit für die Darstellung der zu signierenden Daten aufweist. Durch diese Maßnahme wird sichergestellt, daß der Unterzeichner bei der Signaturfreigabe Kenntnis von den tatsächlich signierten Daten erhält. Um jedoch auch umfangreiche Dokumente, z.B. Verträge oder technische Zeichnungen sinnvoll darstellen zu können, ist eine große und aufwendige Datenanzeigeeinheit erforderlich. Übliche Chipkartenterminals, die lediglich eine Anzeige mit geringem Darstellungsumfang aufweisen, sind für das in der DE 197 54 101 C2 beschriebene Verfahren nicht einsetzbar.

Aus der Patentanmeldung WO 99/08415 ist ein System zum sicheren Erstellen von elektronischen Unterschriften bekannt, bei dem zwischen dem Rechner und der Anzeigeeinheit oder parallel zur Anzeigeeinheit eine zertifizierte Datenträger-Lese/Schreibeinheit vorgesehen wird. Das Erstellen der Unterschrift erfolgt nach einer aktiven Bestätigung durch den Benutzer.

Aufgabe der Erfindung ist es, die genannten Probleme ganz oder zumindest teilweise zu vermeiden und eine Möglichkeit zur Signatur von Dokumenten zu schaffen, die einerseits eine hohe Manipulationssicherheit bietet und andererseits lediglich die übliche Hardware, insbesondere ein übliches Chipkartenterminal benötigt. Insbesondere soll die Erfindung Schutz gegen das oben dargestellte Angriffsszenario bieten, bei dem ein manipuliertes oder virenbefallenes Anwendungsprogramm und/oder Betriebssystem vorliegt.

Erfindungsgemäß wird diese Aufgabe ganz oder zum Teil gelöst durch Verfahren nach den Ansprüchen 1 bzw. 8, durch ein Signatursystem nach Anspruch 12, durch ein Hintergrundsystem nach Anspruch 14 sowie durch computerlesbare Datenträger mit den Merkmalen der Ansprüche 13 bzw. 15. Die abhängigen Ansprüche definieren bevorzugte Ausgestaltungen der Erfindung.

Die Erfindung geht von der Grundidee aus, das zu signierende Dokument mit einer Kennung zu versehen und es dem Benutzer zusammen mit der Kennung auszudrucken oder anzuzeigen. Die Kennung wird dem Benutzer überdies auf einer Anzeige des Chipkartenterminals dargestellt, wenn er das Dokument signiert. Bei einer Übereinstimmung der Kennung auf dem ausgegebenen, z.B. ausgedruckten oder auf einem Bildschirm angezeigten Dokument und auf der Anzeige des Chipkartenterminals ist sichergestellt, daß die Signatur das ausgegebene Dokument betrifft.

Durch die Erfindung werden Manipulationsmöglichkeiten auch dann vermieden, wenn ein die Signaturvorgänge steuerndes Anwendungsprogramm und/oder Betriebssystem eines Arbeitsplatzrechners z.B. wegen eines Virenbefalls korrumpiert ist/sind. Die Erfindung benötigt keine zusätzliche Hardware, weil die Kennung so gewählt werden kann, beispielsweise als sechsoder achtstellige Ziffer, daß sie auf der Anzeige eines üblichen Chipkartenterminals darstellbar ist. Die Erfindung kann deshalb auf vielen schon vorhandenen Arbeitsplätzen durch das bloße Einspielen neuer Software installiert werden.

Die Aufzählungsreihenfolge der Verfahrensschritte in den Ansprüchen soll nicht als Einschränkung des Schutzbereichs verstanden werden. Vielmehr sind Ausgestaltungen der Erfindung vorgesehen, in denen die einzelnen Verfahrensschritte in anderer Reihenfolge oder ganz oder teilweise parallel oder ganz oder teilweise ineinander verzahnt ausgeführt werden. So können beispielsweise die Schritte c) und d) von Anspruch 1 unabhängig voneinander ausgeführt werden, sobald die jeweils benötigten Daten vorliegen. Dies gilt auch dann, wenn die für den jeweils anderen Schritt benötigten Daten noch nicht an das Signatursystem übertragen worden sind.

Vorzugsweise wird das Dokument in manipulationsgesicherter Weise vom Signatursystem an das Hintergrundsystem übertragen. Unter dem Begriff "manipulationsgesichert" soll im vorliegenden Dokument allgemein jede Maßnahme verstanden werden, die unerwünschte Veränderungen von Daten vermeidet, erschwert oder zumindest nachträglich erkennbar macht. In bevorzugten Ausgestaltungen der Erfindung werden zur manipulationsgesicherten Übertragung des Dokuments beim Sender und Empfänger Prüfdaten berechnet. Weichen die Prüfdaten voneinander ab, so liegt eine unerwünschte Datenveränderung vor. Die Übertragung kann dann wiederholt oder der Signaturvorgang ganz abgebrochen werden.

In bevorzugten Ausführungsformen enthalten die Kontrolldaten neben der Kennung eine Ausgabedatei, welche ihrerseits das Dokument und die Kennung aufweist. Die Ausgabedatei und/oder die in ihr enthaltene Kennung können durch Verschlüsselung oder Prüfsummenbildung im oben genannten Sinne gegen Manipulation geschützt sein. Vorzugsweise werden die Kennung und die Ausgabedatei in zwei getrennten Kommunikationsvorgängen vom Hintergrundsystem an das Chipkartenterminal bzw. einen Arbeitsplatzrechner übertragen.

Um zu gewährleisten, daß bei der Ausgabe des Dokuments zusammen mit der Kennung durch die Ausgabeeinrichtung keine Datenverfälschung erfolgt, wird vorzugsweise ein Ausgabetreiber eingesetzt, der unmittelbar auf die Hardware einer Ausgabeschnittstelle und/oder der Ausgabeeinrichtung zugreift. Bevorzugt werden dabei Betriebssystemroutinen des Arbeitsplatzrechners, auf dem der Ausgabetreiber läuft, umgangen. Vorzugsweise ist ferner eine Verifikation der Integrität des Ausgabetreibers vorgesehen, was z.B. durch eine Prüfsummen- oder Signaturberechnung erfolgen kann.

Der erfindungsgemäß vorgesehene computerlesbare Datenträger kann ein elektronisches oder magnetisches oder optisches Speichermedium, z.B. eine Diskette oder Festplatte oder CD-ROM sein, ist aber nicht auf körperliche Datenträger beschränkt. Auch elektrische oder optische Signale, z.B. Spannungspegel einer Kommunikationsverbindung, sollen im hier verwendeten Sinne als computerlesbare Datenträger aufgefaßt werden.

Das erfindungsgemäße Signatursystem, das erfindungsgemäße Hintergrundsystem sowie der erfindungsgemäße computerlesbare Datenträger sind bevorzugt mit Merkmalen weitergebildet, die den oben beschriebenen und/oder in den Verfahrensansprüchen genannten Merkmalen entsprechen.

Weitere Merkmale, Aufgaben und Vorteile der Erfindung gehen aus der folgenden Beschreibung eines Ausführungsbeispiels und mehrerer Ausführungsalternativen hervor. Es wird auf die schematischen Zeichnungen verwiesen, in denen zeigen:
Fig. 1 eine Darstellung relevanter Funktionseinheiten nach einem Ausführungsbeispiel der Erfindung,
Fig. 2 und Fig. 3 ein beispielhaftes Diagramm eines Verfahrensablaufs in dem Ausführungsbeispiel von Fig. 1.

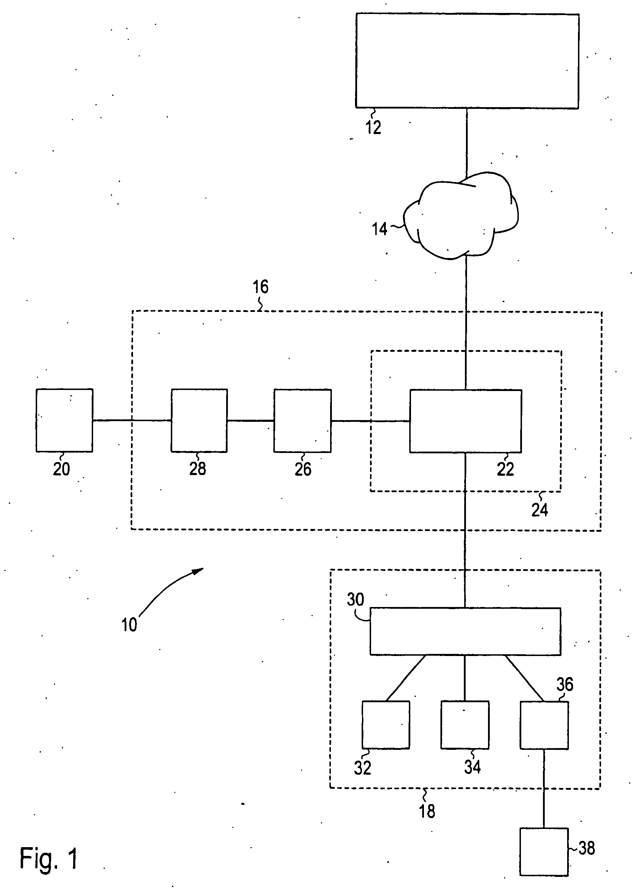

In Fig. 1 sind ein Signatursystem 10 und ein Hintergrundsystem 12 gezeigt, die über ein Kommunikationsnetz 14 Daten auszutauschen vermögen. Das Signatursystem 10 weist die üblichen Hardware-Baugruppen eines für Signaturvorgänge eingerichteten Computer-Arbeitsplatzes auf, nämlich einen als üblichen persönlichen Computer (PC) ausgestalteten Arbeitsplatzrechner 16, ein Chipkartenterminal 18 und eine Ausgabeeinrichtung 20.

Das Hintergrundsystem 12 arbeitet mit dem Signatursystem 10 zusammen. Je nach dem Anwendungsfall kann das Hintergrundsystem 12 beispielsweise ein Rechner zur Weiterleitung elektronischer Post oder ein Rechner einer Bank oder einer Zahlungssystem-Gesellschaft sein. Der Datenaustausch zwischen dem Signatursystem 10 und dem Hintergrundsystem 12 erfolgt über das Kommunikationsnetz 14. Beispielsweise können das öffentliche Telefonnetz und/oder das Internet und/oder ein Intranet und/oder ein lokales Computernetz als Kommunikationsnetz 14 dienen.

Im Hinblick auf das vorliegend beschriebene Ausführungsbeispiel relevante Funktionseinheiten des Arbeitsplatzrechners 16 sind ein Anwendungsprogramm 22, das unter Steuerung eines Betriebssystems 24 ausgeführt wird, sowie ein Ausgabetreiber 26 und eine Ausgabeschnittstelle 28. Das Anwendungsprogramm 22 steuert in Zusammenwirken mit dem Betriebssystem 24 den Großteil der hier beschriebenen Vorgänge. Im vorliegenden Ausführungsbeispiel wird angestrebt, daß die Signaturabläufe auch dann korrekt erfolgen, wenn das Anwendungsprogramm 22 und/oder das Betriebssystem 24 z.B. wegen eines Virenbefalls korrumpiert sind.

Der Ausgabetreiber 26 steuert über die Ausgabeschnittstelle 28 die Ausgabeeinrichtung 20 an. Im hier beschriebenen Ausführungsbeispiel ist die Ausgabeeinrichtung 20 als Drucker ausgestaltet, und demgemäß sind die Ausgabeschnittstelle 28 eine Druckerschnittstelle und der Ausgabetreiber 26 ein Druckertreiber. In Ausführungsvarianten erfolgt jedoch die Dokumentenausgabe mittels einer als Bildschirm ausgestalteten Ausgabeeinrichtung 20. Die Ausgabeschnittstelle 28 ist dann beispielsweise eine Videokarte, und der Ausgabetreiber 26 ist ein auf diese Karte zugeschnittener Videotreiber. Unabhängig von der genauen Ausgestaltung der Ausgabeeinrichtung 20 ist jedoch stets vorgesehen, daß der Ausgabetreiber 26 die Ausgabeschnittstelle 28 und die Ausgabeeinrichtung 20 unmittelbar auf Hardware-Ebene, also ohne Verwendung von Routinen des Betriebssystems 24 oder anderer auf dem Arbeitsplatzrechner 16 laufender Programme, anspricht.

Das Chipkartenterminal 18 ist an sich bekannt. Es weist eine Steuereinheit 30, eine Anzeige 32, eine Tastatur 34 und eine Chipkartenschnittstelle 36 auf. Die Anzeige 32 kann beispielsweise als numerische oder alphanumerische LCD-Anzeige ausgestaltet sein. Die Tastatur 34 kann ähnlich wie eine Telefontastatur zehn Zifferntasten sowie einige wenige Funktionswahltasten aufweisen. An die Chipkartenschnittstelle 36 ist eine Chipkarte 38 anschließbar, die für den Signaturvorgang benötigt wird. In Ausführungsvarianten kann auch vorgesehen sein, daß das Chipkartenterminal 18 eine eigene Ausgabeschnittstelle aufweist, an die z.B. ein Drucker angeschlossen ist. Diese Ausgabeschnittstelle des Chipkartenterminals 18 kann dann statt der Ausgabeschnittstelle 28 des Arbeitsplatzrechners 16 verwendet werden. In solchen Ausführungsvarianten erfolgt die Dokumentenausgabe über die Ausgabeschnittstelle sowie einen Ausgabetreiber des Chipkartenterminals 18, wodurch sich die Manipulationsmöglichkeiten, z.B. durch Verfälschung des Ausgabetreibers 26, weiter verringern.

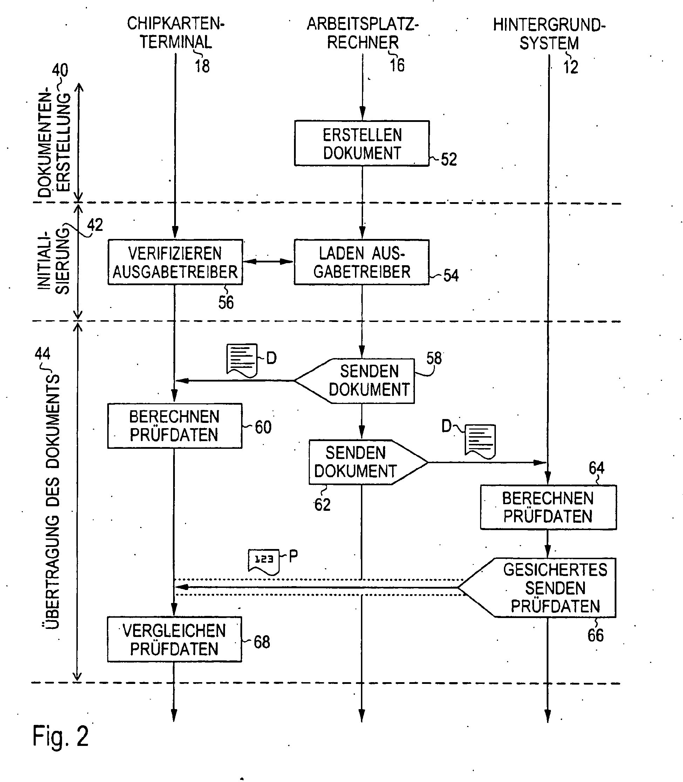

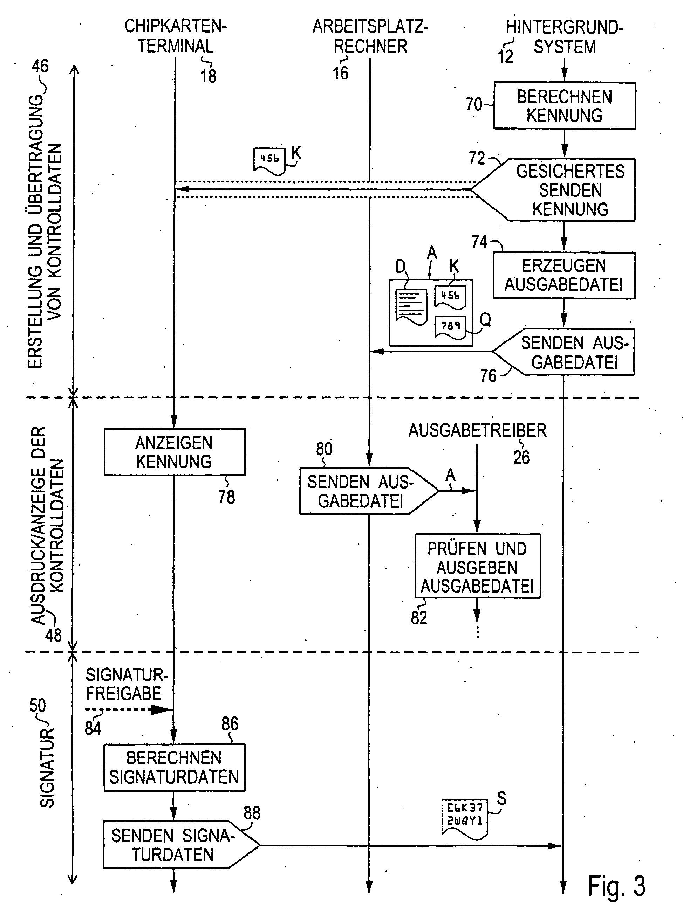

Der in Fig. 2 und Fig. 3 beispielhaft dargestellte Ablauf zeigt die wesentlichen Verfahrensschritte bei der Signatur eines Dokuments D. Der Ablauf läßt sich unterteilen in die Phasen der Dokumentenerstellung 40, der Initialisierung 42, der Dokumentenübertragung 44, der Kontrolldatenerstellung und -übertragung 46, der Kontrolldatenanzeige bzw. -ausgabe 48 sowie der eigentlichen Signatur 50. Diese Phasen werden im folgenden genauer beschrieben. Die hier gewählte Unterteilung in Phasen dient der klareren Darstellung; in realen Ausgestaltungen können einzelne Schritte einer Phase bereits ausgeführt werden, wenn die jeweils vorhergehende Phase noch nicht abgeschlossen ist. Auch die Reihenfolge der Phasen kann verändert werden; beispielsweise kann die Initialisierungsphase 42 erst in Verbindung mit Phase 48 erfolgen. Ferner kann innerhalb der Phasen die tatsächliche Ausführungsreihenfolge von der hier beispielhaft beschriebenen Reihenfolge abweichen. Dies gilt insbesondere für Schritte, die von unterschiedlichen Komponenten des Gesamtsystems ausgeführt werden.

In der ersten Phase 40 erstellt der Benutzer mittels des Anwendungsprogramms 22 das später zu signierende Dokument D auf dem Arbeitsplatzrechner 16 (Schritt 52). Wenn beispielsweise das Anwendungsprogramm 22 eine Home-Banking-Anwendung ist, kann das Dokument D ein Überweisungsauftrag sein. In anderen Fällen ist das Dokument D eine Text- oder Grafikdatei, die mittels eines entsprechenden Text- oder Grafikprogramms als Anwendungsprogramm 22 erstellt wird. Das Anwendungsprogramm 22 kann auch ein E-Mail-Programm sein, und das zu signierende Dokument D ist in diesem Fall eine zu sendende oder weiterzuleitende elektronische Nachricht.

Zur weiteren Vorbereitung des Signaturverfahrens wird in der Initialisierungsphase 42 der Ausgabetreiber 26 in einen Arbeitsspeicher des Arbeitsplatzrechners 16 geladen (Schritt 54). Für die Sicherheit des hier beschriebenen Verfahrens ist es wichtig, daß eine Manipulation des Ausgabetreibers 26 vermieden wird. Der Ausgabetreiber 26 ist deshalb mittels einer kryptographischen Prüfsumme signiert. In Schritt 56 verifiziert das Chipkartenterminal 18 mittels dieser kryptographischen Prüfsumme, ob der Ausgabetreiber 26 unverändert vorliegt. Für den Verifikationsschritt 56 wird der Ausgabetreiber 26 an das Chipkartenterminal 18 übertragen, oder das Chipkartenterminal 18 erhält Zugriff auf den Speicher des Arbeitsplatzrechners 16. In Ausführungsalternativen ist vorgesehen, daß der Ausgabetreiber 26 im Chipkartenterminal 18 gespeichert ist und von diesem in Schritt 54 an den Arbeitsplatzrechner 16 übertragen wird. Der Verifikationsschritt 56 kann dann gegebenenfalls entfallen.

Die folgende Phase 44 betrifft die manipulationsgesicherte Übertragung des Dokuments D vom Signatursystem 10 zum Hintergrundsystem 12. Zu diesem Zweck überträgt der Arbeitsplatzrechner 16 in Schritt 58 das Dokument D an das Chipkartenterminal 18, das daraus in Schritt 60 Prüfdaten, z.B. einen Hash-Wert berechnet. Das Dokument D wird ferner in Schritt 62 vom Arbeitsplatzrechner 16 über das Kommunikationsnetz 14 an das Hintergrundsystem 12 gesendet. Auch das Hintergrundsystem 12 führt eine Prüfdatenberechnung des empfangenen Dokuments D mit dem gleichen Algorithmus wie das Chipkartenterminal 18 durch (Schritt 64).

Es wird nun eine sichere Kommunikationsverbindung zwischen dem Hintergrundsystem 12 und dem Chipkartenterminal 18 aufgebaut. Dies heißt, daß durch geeignete Verschlüsselungsverfahren ein "Abhören" oder eine Manipulation der übertragenen Daten durch das Anwendungsprogramm 22 oder das Betriebssystem 24 ausgeschlossen wird, auch wenn die Verbindung notwendigerweise, da das Chipkartenterminal 18 keinen direkten Zugriff auf das Kommunikationsnetz 14 hat, über das Anwendungsprogramm 22 und/oder das Betriebssystem 24 verläuft. Die Techniken zum Aufbau einer derartigen sicheren Verbindung und zur Datenübertragung darüber sind als solche bekannt und nicht Gegenstand der vorliegenden Erfindung.

In Schritt 66 werden die vom Hintergrundsystem 12 berechneten Prüfdaten P über die sichere Verbindung an das Chipkartenterminal 18 übertragen.
Das Chipkartenterminal 18 vergleicht in Schritt 68 die erhaltenen Prüfdaten P mit den in Schritt 60 berechneten Prüfdaten. Bei einer Übereinstimmung, von der hier ausgegangen werden soll, ist sichergestellt, daß das vom Hintergrundsystem 12 empfangene Dokument D identisch zu dem Dokument D ist, dessen Prüfdaten in Schritt 60 berechnet wurden.

Die nächste Phase 46 betrifft die Erstellung und Übertragung von Kontrolldaten. Das Hintergrundsystem 12 berechnet dazu in Schritt 70 eine Kennung K, die erstens von dem empfangenen Dokument D abhängt und in die zweitens ein Transaktionsbezeichner, z.B. das aktuelle Datum und/oder eine fortlaufende Nummer, eingeht. Die Kennung K wird in Schritt 72 über die sichere Verbindung vom Hintergrundsystem 12 an das Chipkartenterminal 18 gesendet.

Ferner erzeugt das Hintergrundsystem in Schritt 74 eine Ausgabedatei A, die die Daten des Dokuments D sowie die Kennung K aufweist. Die Ausgabedatei A enthält überdies eine weitere Prüfsumme Q, durch die sich die Integrität der Ausgabedatei A verifizieren läßt. Im hier beschriebenen Ausführungsbeispiel ist die Kennung K in der Ausgabedatei A in verschlüsselter Form enthalten. In anderen Ausgestaltungen ist dagegen die gesamte Ausgabedatei A, einschließlich des Dokuments D, verschlüsselt. Eine eigene Prüfsumme Q ist in diesem Fall in der Regel nicht erforderlich.

Die in Schritt 74 erzeugte Ausgabedatei A wird in Schritt 76 an den Arbeitsplatzrechner 16 gesendet. Da die Kennung K verschlüsselt ist, kann sie weder vom Anwendungsprogramm 22 noch vom Betriebssystem 24 ermittelt werden. Die in Phase 46 an das Chipkartenterminal 18 und den Arbeitsplatzrechner 16 übertragenen Daten, also im vorliegenden Ausführungsbeispiel die Kennung K und die Ausgabedatei A, werden insgesamt als "Kontrolldaten" bezeichnet.

In Phase 48 werden die Kontrolldaten vom Chipkartenterminal 18 angezeigt bzw. von der Ausgabeeinrichtung 20 ausgegeben. Dazu wird in Schritt 78 die an das Chipkartenterminal 18 übertragene Kennung K auf der Anzeige 32 dargestellt. Der Arbeitsplatzrechner 16 überträgt in Schritt 80 die Ausgabedatei A an den Ausgabetreiber 26. Wie bereits erwähnt, ist der Ausgabetreiber 26 gegen Manipulationen geschützt und greift unter Umgehung des Betriebssystems 24 unmittelbar auf die Ausgabeschnittstelle 28 bzw. die Ausgabeeinrichtung 20 zu.

Der Ausgabetreiber 26 überprüft in Schritt 82 zunächst die Integrität der Ausgabedatei A anhand der Prüfziffer Q. Dann entschlüsselt er die in der Ausgabedatei A enthaltene Kennung K und gibt diese zusammen mit dem in der Ausgabedatei A enthaltenen Dokument D auf der Ausgabeeinrichtung 20 aus. Im vorliegenden Ausführungsbeispiel ist vorgesehen, daß die entschlüsselte Kennung K in der Art eines Wasserzeichens auf jeder ausgegebenen (z.B. ausgedruckten oder auf einem Bildschirm angezeigten) Seite des Dokuments D dargestellt wird, so daß der Benutzer unmittelbar den Inhalt des Dokuments D und die Kennung K miteinander korrelieren kann.

Der Benutzer überprüft nun, ob die auf der Anzeige 32 des Chipkartenterminals 18 angezeigte Kennung K mit der Kennung K des in Schritt 82 ausgegebenen Dokuments D übereinstimmt. Ist dies der Fall, so kann der Benutzer davon ausgehen, daß das ausgegebene Dokument D identisch mit dem Dokument D ist, das dem Hintergrundsystem 12 vorliegt.

Der Benutzer gibt nun in Phase 50 den eigentlichen Signaturvorgang frei. Die Signaturfreigabe 84 kann auf an sich bekannte Weise durch das Einführen der Chipkarte 38 in das Chipkartenterminal 18 und die Eingabe einer persönlichen Identifikationsnummer (PIN) über die Tastatur 34 des Chipkartenterminals 18 erfolgen. Das Chipkartenterminal 18 und die daran angeschlossene Chipkarte 38 berechnen in Reaktion auf die Signaturfreigabe 84 in Schritt 86 Signaturdaten S nach einem an sich bekannten Signaturverfahren, das als solches nicht Gegenstand der vorliegenden Erfindung ist. In unterschiedlichen Varianten des hier beschriebenen Ausführungsbeispiels können als Grundlage für die Berechnung der Signaturdaten S die in Schritt 60 berechneten Prüfdaten P und/oder die in Zusammenhang mit Schritt 72 empfangene Kennung K und/oder das in Zusammenhang mit Schritt 58 empfangene Dokument D dienen.

In einem abschließenden Schritt 88 werden die Signaturdaten S von dem Chipkartenterminal 18 an das Hintergrundsystem 12 gesendet. Eine sichere Verbindung ist hierfür nicht zwingend erforderlich, sie kann aber in manchen Ausgestaltungen eingesetzt werden.

## Patentansprüche

1. Verfahren zur Signatur eines Dokuments (D) mittels eines Signatursystems (10), das eine Ausgabeeinrichtung (20) und ein Chipkartenterminal (18) aufweist und das Daten mit einem Hintergrundsystem (12) auszutauschen vermag, mit den durch das Signatursystem (10) ausgeführten Schritten:
a) Senden des Dokuments (D) an das Hintergrundsystem (12),
b1) Empfangen einer Kennung (K) durch das Chipkartenterminal (18) in manipulationsgesicherter Weise, und
b2) Empfangen einer Ausgabedatei (A), welche das Dokument (D) und die Kennung (K) enthält, durch einen Arbeitsplatzrechner (16) des Signatursystems (10)
c) Anzeigen der Kennung (K) durch das Chipkartenterminal (18),
d) Ausgeben des in der Ausgabedatei (A) enthaltenen Dokuments (D) zusammen mit der Kennung (K) durch die Ausgabeeinrichtung (20), und
e) Berechnen von Signaturdaten (S) durch das Chipkartenterminal (18) in Reaktion auf eine Signaturfreigabe (84) und Übertragen der Signaturdaten (S) an das Hintergrundsystem (12).

2. Verfahren nach Anspruch 1, **dadurch gekennzeichnet, daß** in Zusammenhang mit Schritt a) das Dokument (D) in manipulationsgesicherter Weise an das Hintergrundsystem (12) übertragen wird.

3. Verfahren nach Anspruch 2, **dadurch gekennzeichnet, daß** das Chipkartenterminal (18) Prüfdaten (P) betreffend das Dokument (D) berechnet und diese mit vom Hintergrundsystem (12) empfangenen Prüfdaten (P) vergleicht.

4. Verfahren nach Anspruch 1, **dadurch gekennzeichnet, daß** die Kennung (K) in der Ausgabedatei (A) verschlüsselt enthalten ist, und/oder daß die Ausgabedatei (A) durch Prüfdaten (Q) gegen Manipulationen gesichert ist.

5. Verfahren nach einem der Ansprüche 1 bis 4, **dadurch gekennzeichnet, daß** in Schritt d) die Ausgabe des Dokuments (D) und der Kennung (K) durch einen Ausgabetreiber (26) erfolgt, der unmittelbar auf die Hardware einer Ausgabeschnittstelle (28) und/oder der Ausgabeeinrichtung (20) zugreift.

6. Verfahren nach Anspruch 5, **dadurch gekennzeichnet, daß** die Integrität des Ausgabetreibers (26) durch das Chipkartenterminal (18) verifiziert wird.

7. Verfahren zur Signatur eines Dokuments (D), bei dem ein Hintergrundsystem (12) mit einem Signatursystem (10) zusammenwirkt, mit den durch das Hintergrundsystem (12) ausgeführten Schritten:
aa) Empfangen des Dokuments (D) von dem Signatursystem (10),
bb1) Berechnen einer Kennung (K) in Abhängigkeit von dem Dokument (D) und einem Transaktionsbezeichner,
bb2) Erzeugen einer Ausgabedatei (A), welche das Dokument (D) und die Kennung (K) enthält,
cc1) Senden der Ausgabedatei (A) an einen Arbeitsplatzrechner (16) des Signatursystems (10),
cc2) Senden der Kennung (K) an ein Chipkartenterminal (18) des Signatursystems (10), und
dd) Empfangen von Signaturdaten (S) von dem Signatursystem (10).

8. Verfahren nach Anspruch 7, **dadurch gekennzeichnet, daß** das Hintergrundsystem (12) Prüfdaten (P) betreffend das Dokument (D) berechnet und diese auf manipulationsgesicherte Weise an das Chipkartenterminal (18) sendet.

9. Verfahren nach einem der Ansprüche 7 bis 8, **dadurch gekennzeichnet, dass** das Signatursystem (10) ein Verfahren gemäß einem der Ansprüche 1 bis 6 ausführt.

10. Signatursystem (10) mit einem Arbeitsplatzrechner (16), an den H ein Chipkartenterminal (18) und eine Ausgabeeinrichtung (20) angeschlossen sind, **dadurch gekennzeichnet, daß** das Signatursystem (10) dazu eingerichtet ist, ein Verfahren nach einem der Ansprüche 1 bis 6 auszuführen.

11. Computerlesbarer Datenträger mit Programminstruktionen für einen Arbeitsplatzrechner (16) und ein Chipkartenterminal (18), wobei der Arbeitsplatzrechner (16) und das Chipkartenterminal (18) zusammen mit einer Ausgabeeinrichtung (20) ein Signatursystem (10) bilden, **dadurch gekennzeichnet, daß** die Programminstruktionen den Arbeitsplatzrechner (16) und das Chipkartenterminal (18) dazu veranlassen, ein Verfahren nach einem der Ansprüche 1 bis 6 auszuführen.

12. Hintergrundsystem (12), das dazu eingerichtet ist, ein Verfahren nach einem der Ansprüche 7 bis 9 auszuführen.

13. Computerlesbarer Datenträger mit Programminstruktionen für ein Hintergrundsystem (12), die das Hintergrundsystem (12) dazu veranlassen, ein Verfahren nach einem der Ansprüche 7 bis 9 auszuführen.

## Claims

1. Method for signing a document (D) by means of a signature system (10) which comprises an output device (20) and a chip-card terminal (18) and which is capable of exchanging data with a background system (12), comprising the following steps executed by the signature system (10):
a) sending the document (D) to the background system (12),
b1) receiving an identifier (K) by means of the chip-card terminal (18) in a tamper-proof manner, and
b2) receiving an output file (A) containing the document (D) and the identifier (K) by means of a work station (16) of the signature system (10),
c) displaying the identifier (K) by means of the chip-card terminal (18),
d) outputting the document (D) contained in the output file (A) together with the identifier (K) by means of an output device (20), and
e) calculating signature data (S) by means of the chip-card terminal (18) in response to a signature approval (84) and transmitting the signature data (S) to the background system (12).

2. Method according to claim 1, **characterised in that**, in connection with step a), the document (D) is transmitted to the background system (12) in a tamper-proof manner.

3. Method according to claim 2, **characterised in that** the chip-card terminal (18) calculates check data (P) relating to the document (D) and compares them with check data (P) received from the background system (12).

4. Method according to claim 1, **characterised in that** the identifier (K) is contained in the output file (A) in an encrypted form, and/or that the output file (A) is protected against tampering by means of check data (Q).

5. Method according to any one of the claims 1 to 4, **characterised in that**, in step d), the document (D) and the identifier (K) are outputted by an output driver (26) directly accessing the hardware of an output interface (28) and/or of the output device (20).

6. Method according to claim 5, **characterised in that** the integrity of the output driver (26) is verified by the chip-card terminal (18).

7. Method for signing a document (D), wherein a background system (12) cooperates with a signature system (10), comprising the following steps executed by the background system (12):
aa) receiving the document (D) from the signature system (10),
bb1) calculating an identifier (K) based on the document (D) and a transaction designator,
bb2) generating an output file (A) containing the document (D) and the identifier (K),
cc1) sending the output file (A) to a work station (16) of the signature system (10),
cc2) sending the identifier (K) to a chip-card terminal (18) of the signature system (10), and
dd) receiving signature data (S) from the signature system (10).

8. Method according to claim 7, **characterised in that** the background system (12) calculates check data (P) relating to the document (D) and sends them to the chip-card terminal (18) in a tamper-proof manner.

9. Method according to any one of the claims 7 to 8, **characterised in that** the signature system (10) executes a method according to any one of the claims 1 to 6.

10. Signature system (10) with a work station (16) connected with a chip-card terminal (18) and an output device (20), **characterised in that** the signature system (10) is configured for executing a method according to any one of the claims 1 to 6.

11. Computer-readable data carrier with program instructions for a work station (16) and a chip-card terminal (18), wherein the work station (16) and the chip-card terminal (18), together with an output device (20), constitute a signature system (10), **characterised in that** the program instructions cause the work station (16) and the chip-card terminal (18) to execute a method according to any one of the claims 1 to 6.

12. Background system (12), which is configured to execute a method according to any one of the claims 7 to 9.

13. Computer-readable data carrier with program instructions for a background system (12), which cause the background system (12) to execute a method according to any one of the claims 7 to 9.

## Revendications

1. Procédé pour signer un document (D) au moyen d'un système de signature (10) qui présente un dispositif de sortie (20) et un terminal pour carte à puce (18) et qui est capable d'échanger des données avec un système d'arrière-plan (12), comprenant les étapes exécutées par le système de signature (10) consistant à :
a) envoyer le document (D) au système d'arrière-plan (12),
b1) recevoir une identification (K) par l'intermédiaire du terminal pour carte à puce (18) d'une manière protégée contre les manipulations, et
b2) recevoir un fichier de sortie (A) contenant le document (D) et l'identification (K) par l'intermédiaire d'un ordinateur individuel (16) du système de signature (10),
c) afficher l'identification (K) par le terminal pour carte à puce (18),
d) sortir le document (D) contenu dans le fichier de sortie (A) en même temps que l'identification (K) par le dispositif de sortie (20), et
e) calculer des données de signature (S) par l'intermédiaire du terminal pour carte à puce (18) en réponse à une autorisation de signature (84) et transmettre les données de signature (S) au système d'arrière-plan (12).

2. Procédé selon la revendication 1, **caractérisé en ce qu'**en relation avec l'étape a), le document (D) est transmis au système d'arrière-plan (12) d'une manière protégée contre les manipulations.

3. Procédé selon la revendication 2, **caractérisé en ce que** le terminal pour carte à puce (18) calcule des données de contrôle (P) concernant le document (D) et les compare à des données de contrôle (P) reçues par le système d'arrière-plan (12).

4. Procédé selon la revendication 1, **caractérisé en ce que** l'identification (K) est contenue de façon cryptée dans le fichier de sortie (A) et/ou **en ce que** le fichier de sortie (A) est protégé contre les manipulations par des données de contrôle (Q).

5. Procédé selon l'une des revendications 1 à 4, **caractérisé en ce qu'**à l'étape d), la sortie du document (D) et de l'identification (K) est effectuée par un pilote de sortie (26) qui accède directement à l'équipement d'une interface de sortie (28) et/ou du dispositif de sortie (20).

6. Procédé selon la revendication 5, **caractérisé en ce que** l'intégrité du pilote de sortie (26) est vérifiée par le terminal pour carte à puce (18).

7. Procédé pour signer un document (D), dans lequel un système d'arrière-plan (12) coopère avec un système de signature (10), comprenant les étapes exécutées par le système d'arrière-plan (12) consistant à :
aa) recevoir le document (D) du système de signature (10)
bb1) calculer une identification (K) en fonction du document (D) et d'un identificateur de transaction,
bb2) générer un fichier de sortie (A) contenant le document (D) et l'identification (K),
cc1) envoyer le fichier de sortie (A) à un ordinateur individuel (16) du système de signature (10),
cc2) envoyer l'identification (K) à un terminal pour carte à puce (18) du système de signature (10), et
dd) recevoir des données de signature (S) du système de signature (10).

8. Procédé selon la revendication 7, **caractérisé en ce que** le système d'arrière-plan (12) calcule des données de contrôle (P) concernant le document (D) et les envoie au terminal pour carte à puce (18) d'une manière protégée contre les manipulations.

9. Procédé selon l'une des revendications 7 à 8, **caractérisé en ce que** le système de signature (10) exécute un procédé selon l'une des revendications 1 à 6.

10. Système de signature (10) comprenant un ordinateur individuel (16) auquel sont connectés un terminal pour carte à puce (18) et un dispositif de sortie (20), **caractérisé en ce que** le système de signature (10) est aménagé pour exécuter un procédé selon l'une des revendications 1 à 6.

11. Support de données lisible par ordinateur avec des instructions de programme pour un ordinateur individuel (16) et un terminal pour carte à puce (18), dans lequel l'ordinateur individuel (16) et le terminal pour carte à puce (18) forment ensemble avec un dispositif de sortie (20) un système de signature (10), **caractérisé en ce que** les instructions de programme amènent l'ordinateur individuel (16) et le terminal pour carte à puce (18) à exécuter un procédé selon l'une des revendications 1 à 6.

12. Système d'arrière-plan (12) qui est aménagé pour exécuter un procédé selon l'une des revendications 7 à 9.

13. Support de données lisible par ordinateur avec des instructions de programme pour un système d'arrière-plan (12) qui amènent le système d'arrière-plan (12) à exécuter un procédé selon l'une des revendications 7 à 9.
